(19) Europäisches Patentamt
European Patent Office
Office européen des brevets

(11) **EP 4 442 863 A1**

(12) **EUROPEAN PATENT APPLICATION**
published in accordance with Art. 153(4) EPC

(43) Date of publication:
**09.10.2024 Bulletin 2024/41**

(21) Application number: **22901016.0**

(22) Date of filing: **02.11.2022**

(51) International Patent Classification (IPC):
*C25B 9/65* (2021.01)    *C01B 3/00* (2006.01)
*C25B 1/02* (2006.01)    *C25B 9/00* (2021.01)
*C25B 9/05* (2021.01)    *C25B 9/23* (2021.01)

(52) Cooperative Patent Classification (CPC):
C01B 3/00; C25B 1/02; C25B 9/00; C25B 9/05;
C25B 9/23; C25B 9/65; Y02E 60/50

(86) International application number:
**PCT/JP2022/040945**

(87) International publication number:
**WO 2023/100583 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2021 JP 2021193865**

(71) Applicant: **Panasonic Intellectual Property
Management Co., Ltd.
Kadoma-shi, Osaka 571-0057 (JP)**

(72) Inventors:
• **NAKAUE, Takayuki
  Kadoma-shi Osaka 571-0057 (JP)**
• **SAKAI, Osamu
  Kadoma-shi Osaka 571-0057 (JP)**
• **KANI, Yukimune
  Kadoma-shi Osaka 571-0057 (JP)**

(74) Representative: **Grünecker Patent- und
Rechtsanwälte
PartG mbB
Leopoldstraße 4
80802 München (DE)**

(54) **COMPRESSION DEVICE**

(57)     A compression device includes: an electrochemical cell that includes an anode and a cathode that sandwich an electrolyte membrane; a voltage application unit that applies a voltage between the anode and the cathode; and a metal plate that is exposed to compressed hydrogen generated at the cathode and that is resistant to hydrogen embrittlement. The metal plate includes a first terminal connected to the voltage application unit. The first terminal is directly connected to a second terminal that has a lower resistance than the first terminal. The second terminal is directly connected to the voltage application unit, and the first terminal is connected to the voltage application unit via the second terminal.

FIG. 1

**Description**

Technical Field

The present disclosure relates to a compression device.

Background Art

In recent years, hydrogen has been drawing attention as a clean alternative energy source that replaces fossil fuel in view of environmental problems such as global warming and energy problems such as depletion of petroleum resources. Hydrogen is expected to be a clean energy source, because only water is basically generated, carbon dioxide which causes global warming is not discharged, and almost no nitrogen oxides are discharged when hydrogen is burned. Fuel cells are provided as a device that efficiently uses hydrogen as a fuel, and are being developed and spread for use as power sources for automobiles and for in-house power generation for household use.

For example, hydrogen for use as a fuel for fuel cell vehicles is generally stored in a hydrogen tank inside the vehicle in the state of being compressed to a high pressure of several tens of MPa. Such high-pressure hydrogen is generally obtained by compressing hydrogen at a low pressure (normal pressure) using a mechanical compression device.

For the coming hydrogen society, there is a need to develop technologies that can store hydrogen at high density and transport or use hydrogen in small capacities and at low cost, in addition to producing hydrogen. In particular, it is necessary to develop a hydrogen supply infrastructure in order to promote the spread of fuel cells, and various proposals have been made to produce, purify, and store at high density high-purity hydrogen in order to stably supply hydrogen.

Thus, Patent Literature 1 proposes an electrochemical hydrogen pump in which hydrogen in a hydrogen-containing gas is purified and increased in pressure by applying a desired voltage between an anode and a cathode disposed to sandwich an electrolyte membrane, for example. A stack of the cathode, the electrolyte membrane, and the anode is referred to as a membrane electrode assembly (hereinafter "MEA"). At this time, the hydrogen-containing gas supplied to the anode may contain impurities. For example, the hydrogen-containing gas may be a hydrogen gas generated as a by-product from iron-making plants etc., or may be a reformed gas obtained by reforming a city gas.

Meanwhile, Patent Literature 2 proposes a water electrolysis device of a differential pressure type, in which low-pressure hydrogen generated by electrolysis of water is increased in pressure using an MEA.

Citation List

Patent Literature

PTL 1: Japanese Patent No. 6928922
PTL 2: Japanese Patent No. 6129809

Summary of Invention

Technical Problem

An object of the present disclosure is to provide a compression device that can suppress a reduction in the efficiency of hydrogen compression operation compared to the related art, by way of example.

Solution to Problem

One aspect of the present disclosure provides a compression device including: an electrochemical cell that includes an anode and a cathode that sandwich an electrolyte membrane; a voltage application unit that applies a voltage between the anode and the cathode; and a metal plate that is exposed to compressed hydrogen generated at the cathode and that is resistant to hydrogen embrittlement, in which the metal plate includes a first terminal connected to the voltage application unit, the first terminal is directly connected to a second terminal that has a lower resistance than the first terminal, and the second terminal is directly connected to the voltage application unit, and the first terminal is connected to the voltage application unit via the second terminal.

Advantageous Effects of Invention

The compression device according to one aspect of the present disclosure exhibits the effect of suppressing a reduction in the efficiency of hydrogen compression operation compared to the related art.

Brief Description of Drawings

[Fig. 1] Fig. 1 is a perspective view illustrating an example of an electrochemical hydrogen pump according to an embodiment.
[Fig. 2] Fig. 2 illustrates an example of a stack in the electrochemical hydrogen pump according to the embodiment.
[Fig. 3A] Fig. 3A illustrates an example of a terminal connection portion of a power feed plate in an electrochemical hydrogen pump according to a second example of the embodiment.
[Fig. 3B] Fig. 3B illustrates an example of a terminal connection portion of a power feed plate in the electrochemical hydrogen pump according to the second example of the embodiment.
[Fig. 4] Fig. 4 illustrates an example of the results of verifying the effect of reducing the terminal resistance at the terminal connection portions in Figs. 3A and 3B. Description of Embodiments

In conventional examples, the terminal configuration of a metal plate for applying the voltage of a voltage application unit to an electrochemical cell in compression devices such as electrochemical hydrogen pumps and water electrolysis devices has not been fully studied. Specifically, it is necessary that metal plates exposed to compressed hydrogen should be composed of a conductive material that is resistant to hydrogen embrittlement. In this case, however, it may be difficult to select a conductive material with low resistivity. Then, the voltage of the voltage application unit may be increased due to the terminal resistance at terminals constituted of a conductive material with high resistivity. As a result, the efficiency of the hydrogen compression operation of the compression device may be reduced.

Thus, a first aspect of the present disclosure provides a compression device including: an electrochemical cell that includes an anode and a cathode that sandwich an electrolyte membrane; a voltage application unit that applies a voltage between the anode and the cathode; and a metal plate that is exposed to compressed hydrogen generated at the cathode and that is resistant to hydrogen embrittlement, in which the metal plate includes a first terminal connected to the voltage application unit, the first terminal is directly connected to a second terminal that has a lower resistance than the first terminal, and the second terminal is directly connected to the voltage application unit, and the first terminal is connected to the voltage application unit via the second terminal.

With the compression device according to the present aspect with such a configuration, it is possible to suppress a reduction in the efficiency of hydrogen compression operation compared to the related art.

Specifically, in the compression device according to the present aspect, a material with high hydrogen embrittlement resistance may be selected as the material of the metal plate exposed to compressed hydrogen, and a material with lower resistivity than the material of the metal plate (first terminal) may be selected as the material of the second terminal. Consequently, in the compression device according to the present aspect, the second terminal is directly connected to the voltage application unit, and the first terminal of the metal plate is connected to the voltage application unit via the second terminal, and thus the terminal resistance can be reduced compared to the case where the first terminal of the metal plate is directly connected to the voltage application unit. Hence, with the compression device according to the present aspect, the voltage rise of the voltage application unit due to the terminal resistance is appropriately suppressed.

The above language "the first terminal is connected to the voltage application unit via the second terminal" means that the first terminal is electrically connected to the voltage application unit via the second terminal.

The compression device according to a second aspect of the present disclosure may be the compression device according to the first aspect, in which the metal plate includes a flow path through which the compressed hydrogen flows.

The compression device according to a third aspect of the present disclosure may be the compression device according to the first or second aspect, in which the metal plate is composed of SUS316 or SUS316L.

Since SUS316 and SUS316L have high characteristics in terms of acid resistance and hydrogen embrittlement resistance among various types of stainless steel, it is convenient to select SUS316 or SUS316L as the material of the metal plate.

The compression device according to a fourth aspect of the present disclosure may be the compression device according to any one of the first to third aspects, in which the second terminal is composed of a material containing copper.

With such a configuration, a low-cost and low-resistivity copper-containing conductive material is selected as the material of the second terminal in the compression device according to the present aspect, which makes it possible to render the second terminal highly conductive and cost-effective compared to the case where such a conductive material is not selected.

An embodiment of the present disclosure will be described below with reference to the accompanying drawings. The embodiment described below is an example of each of the above aspects. Hence, the shapes, materials, constituent elements, and positions and connections of the constituent elements are merely exemplary, and do not limit the above aspects unless stated in the claims. In addition, among the following constituent elements, constituent elements not disclosed in the independent claim which indicates the highest-level concept of the above aspects are described as optional constituent elements. In addition, the description may be omitted for constituent elements with the same reference numeral in the drawings. In the drawings, the constituent elements are illustrated schematically for ease of understanding, and may not be accurate in terms of shapes, dimension ratios, etc.

(Embodiment)

The configuration and operation of an electrochemical hydrogen pump as an example of the above compression device will be described in relation to the following embodiment. However, the device configuration described below is also applicable to the configuration of a water electrolysis device as an example of the above compression device, for example.

[Overall Configuration of Device]

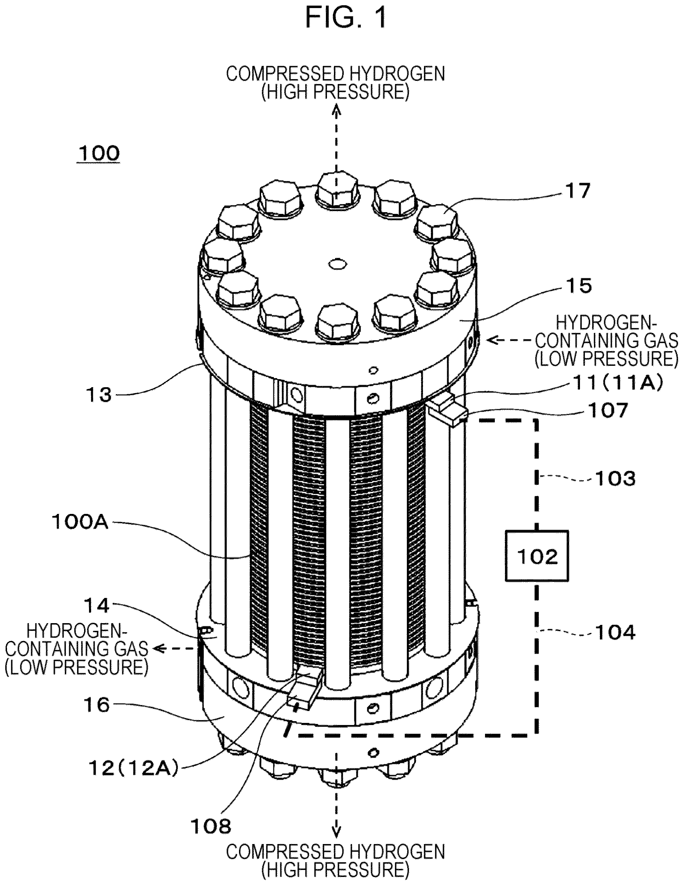

Fig. 1 is a perspective view illustrating an example of an electrochemical hydrogen pump according to the embodiment.

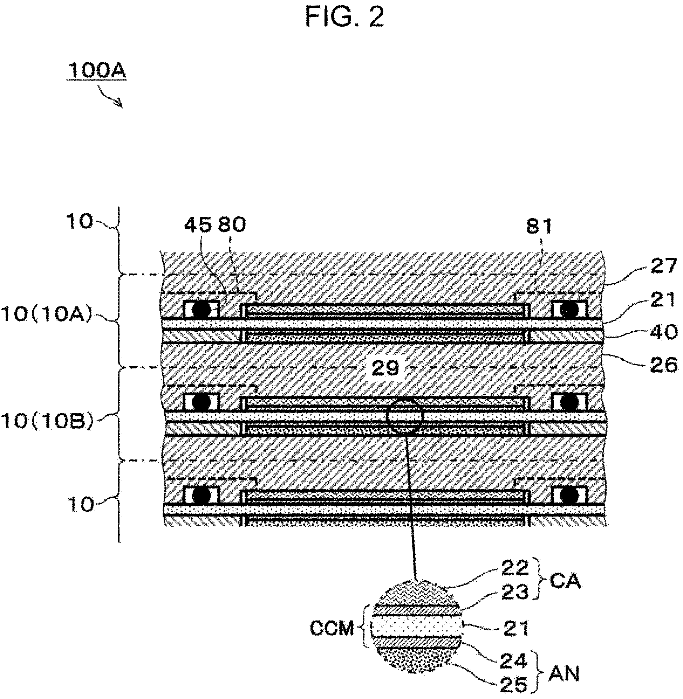

An electrochemical hydrogen pump 100 includes a stack 100A in which hydrogen pump units 10 (see Fig. 2) including MEAs (electrochemical cells) are stacked and a voltage application unit 102.

In each electrochemical cell, a pair of separators sandwiches an anode and a cathode of the electrochemical cell from the outer sides. In this case, an anode separator in contact with the anode is a conductive plate-shaped member for supplying the anode with a hydrogen-containing gas. This plate-shaped member includes a gas flow path through which the hydrogen-containing gas to be supplied to the anode flows. A cathode separator in contact with the cathode is a conductive plate-shaped member for discharging compressed hydrogen ($H_2$) from the cathode to the outside. This plate-shaped member includes a communication path 80 and a communication path 81 (see Fig. 2) for coupling the cathode and the outside. While the gas flow path of the anode separator can be provided separately from the anode separator, it is common to provide the gas flow path by forming a serpentine groove, for example, in the surface of the anode separator.

The above separators are disposed on the outer sides of the electrochemical cell to mechanically fix the electrochemical cell and electrically connect adjacent electrochemical cells in series with each other. A common stacked and fastened structure is formed by alternately superposing electrochemical cells and separators to stack about 10 to 200 electrochemical cells, sandwiching the stack 100A from both sides between a pair of end plates 15, 16 via a pair of power feed plates 11, 12 and a pair of insulating plates 13, 14, and fastening the end plates 15, 16 using a plurality of fasteners 17.

In the above case, in order to supply an appropriate amount of hydrogen-containing gas from the outside to the serpentine gas flow path of the anode separator, it is necessary to configure the anode separator such that a groove-shaped communication path is branched from an appropriate conduit so that the downstream end of the communication path is coupled to one end of the gas flow path of the anode separator. Such a conduit is referred to as an anode gas inlet manifold, and this anode gas inlet manifold is composed of a set of through holes provided at appropriate locations of the members of the stack 100A.

In order to discharge an extra hydrogen-containing gas from the serpentine gas flow path of the anode separator to the outside, it is necessary to configure the anode separator such that a groove-shaped communication path is branched from an appropriate conduit so that the downstream end of the communication path is coupled to the other end of the gas flow path of the anode separator. Such a conduit is referred to as an anode gas outlet manifold, and this anode gas outlet manifold is composed of a set of through holes provided at appropriate locations of the members of the stack 100A.

In order to discharge high-pressure compressed hydrogen from the cathode of the cathode separator to the outside, it is necessary to configure the cathode separator such that an appropriate conduit and the communication path 80 and the communication path 81 are coupled. Such a conduit is referred to as a cathode gas outlet manifold, and this cathode gas outlet manifold is composed of a set of through holes provided at appropriate locations of the members of the stack 100A.

The electrochemical hydrogen pump 100 includes a pair of end plates 15, 16 provided at both ends of the hydrogen pump unit 10 in the stacking direction, and fasteners 17 that fasten the pair of end plates 15, 16 in the stacking direction.

The fasteners 17 may be of any configuration as long as the plurality of hydrogen pump units 10 and the pair of end plates 15, 16 can be fastened in the stacking direction. Examples of the fasteners 17 include a bolt and a nut with a disc spring.

Consequently, in the electrochemical hydrogen pump 100 according to the present embodiment, the plurality of hydrogen pump units 10 are appropriately held in the stacked state by the fastening pressure of the fasteners 17 in the stacking direction. Then, the sealing performance of sealing members (e.g. O-rings 45 and surface sealing materials 40 in Fig. 2) is appropriately exhibited between the members of the hydrogen pump units 10, and the contact resistance between the members is reduced.

The voltage application unit 102 is a device that applies a voltage between an anode AN and a cathode CA. Specifically, a high potential of the voltage application unit 102 is applied to the anode AN, and a low potential of the voltage application unit 102 is applied to the cathode CA. The voltage application unit 102 may be of any configuration as long as a voltage can be applied between the anode AN and the cathode CA. For example, the voltage application unit 102 may be a device that adjusts the voltage applied between the anode AN and the cathode CA. At this time, the voltage application unit 102 includes a DC/DC converter when connected to a DC power source such as a battery, a solar cell, or a fuel cell, and includes an AC/DC converter when connected to an AC power source such as a commercial power source. The voltage application unit 102 may be a power-type power source in which the voltage applied between the anode AN and the cathode CA and the current flowing between the anode AN and the cathode CA are adjusted such that power at a predetermined set value is supplied to the hydrogen pump units 10, for example.

[Configuration of Stack]

Next, an example of the configuration of the stack 100A will be described in detail with reference to the drawings.

Fig. 2 illustrates an example of a stack in the electrochemical hydrogen pump according to the embodiment. Fig. 2 illustrates a vertical section of the stack 100A including a line that passes through the center of stack 100A and the center of the cathode gas outlet manifold (not illustrated) through which high-pressure compressed hydrogen flows in plan view of the electrochemical hydrogen pump 100 in Fig. 1.

As described above, the stack 100A includes a plurality of stacked hydrogen pump units 10. While four hydrogen pump units 10 are stacked in the example illustrated in Fig. 2, the number of hydrogen pump units 10 is not limited thereto. That is, the number of hydrogen pump units 10 can be set to an appropriate number on the basis of operating conditions such as the amount of hydrogen compressed by the electrochemical hydrogen pump 100.

In the example illustrated in Fig. 2, an anode separator 26 and a cathode separator 27 are integrated in the hydrogen pump units 10. Specifically, a bipolar plate 29 (bipolar plate) functions as the anode separator 26 of a hydrogen pump unit 10A, and functions as the cathode separator 27 of a hydrogen pump unit 10B. This allows a reduction in the number of components of the electrochemical hydrogen pump 100. For example, the number of separators can be reduced, and sealing members (e.g. O-rings) between the separators can be eliminated.

The joint between the anode separator 26 and the cathode separator 27 may be of any configuration. For example, the anode separator 26 and the cathode separator 27 can be joined by various methods such as diffusion bonding, mechanical bonding such as bolting, bonding, and welding. In addition, one or both of the joint surfaces of the cathode separator 27 and the anode separator 26 may be provided with a flow path groove (not illustrated), through which a heating medium flows to adjust the temperature of the electrochemical hydrogen pump 100, before joining the anode separator 26 and the cathode separator 27.

However, the anode separator 26 and the cathode separator 27 may be configured separately, although not illustrated.

The hydrogen pump unit 10 includes an electrolyte membrane 21, an anode AN, a cathode CA, a cathode separator 27, an anode separator 26, a surface sealing material 40, and an O-ring 45. In the hydrogen pump unit 10, the electrolyte membrane 21, an anode catalyst layer 24, a cathode catalyst layer 23, an anode power feeder 25, a cathode power feeder 22, the anode separator 26, and the cathode separator 27 are stacked.

The anode AN is provided on one of the main surfaces of the electrolyte membrane 21. The anode AN is an electrode that includes the anode catalyst layer 24 and the anode power feeder 25.

The cathode CA is provided on the other of the main surfaces of the electrolyte membrane 21. The cathode CA is an electrode that includes the cathode catalyst layer 23 and the cathode power feeder 22.

In general, a catalyst coated membrane CCM in which the cathode catalyst layer 23 and the anode catalyst layer 24 are integrally joined to the electrolyte membrane 21 is often used in the electrochemical hydrogen pump 100.

Thus, the anode power feeder 25 and the cathode power feeder 22 are provided for the anode catalyst layer 24 and the cathode catalyst layer 23, respectively, of the catalyst coated membrane CCM. Consequently, the electrolyte membrane 21 is held between the anode AN and the cathode CA.

The electrolyte membrane 21 is a polymer membrane with proton conductivity. The electrolyte membrane 21 may be of any configuration as long as the electrolyte membrane 21 has proton conductivity. Examples of the electrolyte membrane 21 include, but are not limited to, fluorine-based polymer electrolyte membranes and hydrocarbon-based polymer electrolyte membranes. Specific examples of the electrolyte membrane 21 include Nafion (registered trademark; manufactured by DuPont) and Aciplex (registered trademark; manufactured by Asahi Kasei Corporation).

The anode catalyst layer 24 is provided in contact with one of the main surfaces of the electrolyte membrane 21. While the anode catalyst layer 24 contains platinum as an example of catalytic metal, this is not limiting.

The cathode catalyst layer 23 is provided in contact with on the other of the main surfaces of the electrolyte membrane 21. While the cathode catalyst layer 23 contains platinum as an example of catalytic metal, this is not limiting.

Examples of catalyst carriers of the cathode catalyst layer 23 and the anode catalyst layer 24 include, but are not limited to, carbon particles such as carbon black and graphite and conductive oxide particles.

In the cathode catalyst layer 23 and the anode catalyst layer 24, fine particles of the catalytic metal are carried in high dispersion by the catalyst carriers. In addition, it is common to add proton-conductive ionomer components to the cathode catalyst layer 23 and the anode catalyst layer 24, in order to increase the electrode reaction field.

The cathode power feeder 22 is provided on the cathode catalyst layer 23. In addition, the cathode power feeder 22 is composed of a porous material, and is conductive and gas-diffusive. Further, it is desirable that the cathode power feeder 22 should be elastic enough to appropriately follow the displacement and deformation of the constituent members caused by the differential pressure between the cathode CA and the anode AN during the operation of the electrochemical hydrogen pump 100.

In the electrochemical hydrogen pump 100 according to the present embodiment, a member composed of carbon fibers is used as the cathode power feeder 22. Such a member may be a porous carbon fiber sheet such as carbon paper, carbon cloth, and carbon felt, for example.

However, a carbon fiber sheet may not be used as the base material of the cathode power feeder 22. For example, a sintered body of metal fibers made of titanium, a titanium alloy, and stainless steel or a sintered body of metal particles made of these may be used as the base material of the cathode power feeder 22.

The anode power feeder 25 is provided on the anode catalyst layer 24. In addition, the anode power feeder 25 is composed of a porous material, and is conductive and gas-diffusive. Further, it is desirable that the anode power feeder 25 should be highly rigid enough to suppress the displacement and deformation of the constituent members caused by the differential pressure between the cathode CA and the anode AN during the operation of the electrochemical hydrogen pump 100.

Specifically, a fiber sintered body, a powder sintered body, expanded metal, metal mesh, punched metal, etc. made of titanium, a titanium alloy, stainless steel, carbon, etc. may be used as the base material of the anode power feeder 25.

The anode separator 26 is a member provided on the anode AN. The cathode separator 27 is a member provided on the cathode CA. Specifically, the anode power feeder 25 is in contact with an area (center portion) of the anode separator 26 on the anode AN side and facing the anode AN. Meanwhile, a recess is provided in the center portion of the cathode separator 27, and the cathode power feeder 22 is housed in the recess.

While the anode separator 26 and the cathode separator 27 described above may be composed of a metal sheet of titanium, stainless steel, gold, etc., for example, this is not limiting. For example, the anode separator 26 and the cathode separator 27 may be composed of carbon or a resin, on the surface of which a thin film of metal such as titanium and stainless steel is formed. When the anode separator 26 and the cathode separator 27 are composed of stainless steel, it is desirable to select SUS316 or SUS316L as the material of the anode separator 26 and the cathode separator 27. This is because SUS316 and SUS316L have high characteristics in terms of acid resistance, hydrogen embrittlement resistance, etc. among various types of stainless steel.

Here, according to Non-patent Literature 1 (Yukitaka MURAKAMI, "Mechanism of Hydrogen Embrittlement and Design of Strength of Hydrogen Devices," Yokendo Co., Ltd., 2012, p213-p216), the term "hydrogen embrittlement resistance" refers to material properties with which the tensile strength of a notched test piece and the area reduction of a smooth test piece are not degraded in a hydrogen gas or in a helium gas, and refers to material properties with which the ratio of the tensile strength in the hydrogen gas to the tensile strength with the helium gas flow and the ratio of the tensile strength with the hydrogen gas flow to the area reduction with the helium gas flow are both 1 under a test condition at pressures and temperatures of the hydrogen and helium gases of 69 MPa and 295 K, respectively, for example. In addition, Non-patent Literature 1 states that austenitic stainless steel, aluminum alloys, and copper alloys belong to a "non-embrittled" group. Typical steel materials with such "hydrogen embrittlement resistance" include SUS316 and SUS316L, which belong to the austenitic stainless steel and are prescribed in "JIS G4304: Hot-rolled Stainless Steel Plate and Steel Strip" or "JIS G4305: Cold-rolled Stainless Steel Plate and Steel Strip".

From the above, the hydrogen pump unit 10 is formed by sandwiching the electrochemical cell between the cathode separator 27 and the anode separator 26.

[Terminal Configuration for Applying Voltage]

Next, an example of the terminal configuration for applying a voltage to the electrochemical cell will be described in detail with reference to the drawings.

First, the power feed plate 11 is electrically in contact with the cathode separator 27 which is positioned at one end in the stacking direction, and the power feed plate 12 is electrically in contact with the anode separator 26 at the other end in the stacking direction.

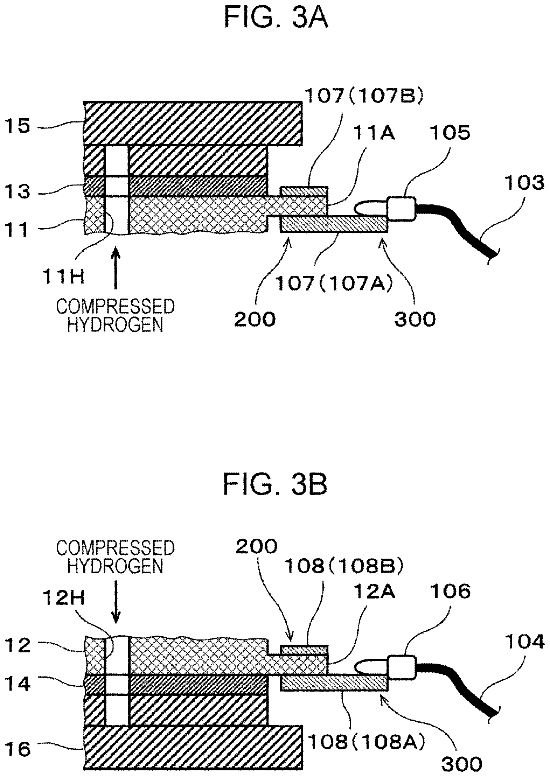

Here, the power feed plate 11 and the power feed plate 12 are generally exposed to compressed hydrogen generated at the cathode CA. In the example illustrated in Fig. 1, the cathode gas outlet manifold penetrates the power feed plate 11 and the power feed plate 12 at appropriate locations. That is, in the electrochemical hydrogen pump 100 according to the present embodiment, the power feed plate 11 and the power feed plate 12 correspond to an example of the "metal plate" according to the present disclosure. In addition, a through hole 11H and a through hole 12H (see Figs. 3A and 3B), which compose the respective cathode manifolds of the power feed plate 11 and the power feed plate 12, correspond to an example of the "flow path through which compressed hydrogen generated at the cathode flows" according to the present disclosure.

Therefore, it is necessary that the power feed plate 11 and the power feed plate 12 should be composed of a conductive material with hydrogen embrittlement resistance. For example, it is desirable that the power feed plate 11 and the power feed plate 12 should be composed of a metal sheet of titanium, stainless steel, etc., carbon, or a resin, on the surface of which a thin film of metal such as titanium and stainless steel is formed. When the power feed plate 11 and the power feed plate 12 are composed of stainless steel, it is desirable to select SUS316 or SUS316L as the material of the power feed plate 11 and the power feed plate 12. This is because SUS316 and SUS316L have high characteristics in terms of acid resistance, hydrogen embrittlement resistance, etc. among various types of stainless steel.

Here, in the electrochemical hydrogen pump 100 according to the present embodiment, the power feed plate 11 includes a first terminal 11A connected to the voltage application unit 102, the first terminal 11A is directly connected to a second terminal 107 that has a lower resistance than the first terminal 11A, the second terminal 107 is directly connected to the voltage application unit 102, and the first terminal 11A is connected to the voltage application unit 102 via the second terminal 107. That is, the terminal of a wire 103 from the voltage application unit 102 is in contact with the second terminal 107, and the second terminal 107 and the first terminal 11A are in contact with each other. This allows the first terminal 11A to be electrically connected to the voltage application unit 102 via the second terminal 107.

A resistance R of the first terminal 11A and the second terminal 107 can be calculated by the following formula (1).

$$R = \rho \times L/S \cdots (1)$$

In the formula (1), a resistivity $\rho$ (Qm) is a proportional constant that represents how strongly a material resists a current flow, and is a material-specific value. For example, the values of $\rho$ ($\Omega \cdot$m) of metal materials at room temperature are as indicated in Table 1 below.

[Table 1]

| Type of metal | Resistivity $\Omega \cdot$m ($10^{-8}$) |
|---|---|
| SUS316, SUS316L | 74 |
| Copper | 1.72 |
| Gold | 2.05 |
| Nickel | 6.2 |
| Brass (copper 65%, zinc 35%) | 6.3 |
| Tin | 11.5 |

In the formula (1), a cross-sectional area S corresponds to the product of the thickness of the terminal (the length of the terminal in the vertical direction when described with reference to the sectional views of the terminal in Figs. 3A and 3B) and the width of the terminal (the length of the terminal in the depth direction when described with reference to the sectional views of the terminal in Figs. 3A and 3B).

In the formula (1), a length L corresponds to the length of the terminal (the length of the terminal in the lateral direction when described with reference to the sectional views of the terminal in Figs. 3A and 3B).

In the example illustrated in Fig. 1, the first terminal 11A is a part of a metal plate that composes the power feed plate 11, and is a belt-shaped projecting portion that projects outward from the side surface of the metal plate. The second terminal 107 is a belt-shaped and flat-plate-shaped member that overlaps the first terminal 11A in surface contact therewith. The connection between the terminal of the wire 103 from the voltage application unit 102 and the second terminal 107 and the connection between the second terminal 107 and the first terminal 11A are made by coupling members (e.g. a bolt and a nut) (not illustrated). The details of the second terminal 107 will be described in relation to first and second examples.

In the electrochemical hydrogen pump 100 according to the present embodiment, in addition, the power feed plate 12 includes a first terminal 12A connected to the voltage application unit 102, the first terminal 12A is connected to a second terminal 108 that has a lower resistance than the first terminal 12A, the second terminal 108 is directly connected to the voltage application unit 102, and the first terminal 12A is connected to the voltage application unit 102 via the second terminal 108. That is, the terminal of a wire 104 from the voltage application unit 102 is in contact with the second terminal 108, and the second terminal 108 and the first terminal 11A are in contact with each other.

A resistance R of the first terminal 12A and the second terminal 108 can be calculated by the formula (1), as in the case of the first terminal 11A and the second terminal 107.

In the example illustrated in Fig. 1, the first terminal 12A is a part of a metal plate that composes the power feed plate 12, and is a belt-shaped projecting portion that projects outward from the side surface of the metal plate. The second terminal 108 is a belt-shaped and flat-plate-shaped member that overlaps the first terminal 12A in surface contact therewith. The connection between the terminal of the wire 104 from the voltage application unit 102 and the second terminal 108 and the connection between the second terminal 108 and the first terminal 12A are made by coupling members (e.g. a bolt and a nut) (not illustrated). The details of the second terminal 108 will be described in relation to first and second examples.

A hydrogen system that includes the electrochemical hydrogen pump 100 can also be constructed, although not illustrated. In this case, devices that are necessary for the hydrogen compression operation of the hydrogen system are provided as appropriate. For example, the hydrogen system may be provided with a dew point adjuster (e.g. a humidifier) that adjusts the dew point of a mixed gas obtained by mixing a highly humidified hydrogen-containing gas discharged from the anode AN and a slightly humidified hydrogen-containing gas supplied from an external hydrogen supply source. At this time, the hydrogen-containing gas from the external hydrogen supply source may be generated by a water electrolysis device, for example.

The hydrogen system may also be provided with a temperature detector that detects the temperature of the electrochemical hydrogen pump 100, a hydrogen reservoir that temporarily stores the hydrogen discharged from the cathode CA of the electrochemical hydrogen pump 100, a pressure detector that detects the pressure of a hydrogen gas in the hydrogen reservoir, etc., for example.

The configuration of the electrochemical hydrogen pump 100 and various devices (not illustrated) of the hydrogen system are exemplary, and are not limiting. For example, a dead-end structure in which all the hydrogen in the hydrogen-containing gas supplied to the anode AN through the anode gas inlet manifold is compressed at the cathode CA may be employed, instead of providing the anode gas outlet manifold.

[Operation]

An example of the hydrogen compression operation of the electrochemical hydrogen pump 100 will be described below with reference to the drawings.

The following operation may be performed by a computation circuit of a controller (not illustrated) reading a control program from a storage circuit of the controller, for example. However, it is not always necessary that the following operation should be performed by the controller. An operator may perform a part of the operation. In the example described below, the operation is controlled by the controller.

First, a low-pressure hydrogen-containing gas is supplied to the anode AN of the electrochemical hydrogen pump 100, and the voltage of the voltage application unit 102 is applied to the electrochemical cells through the first terminal 11A and the second terminal 107 and the first terminal 12A and the second terminal 108.

Then, in the anode catalyst layer 24 of the anode AN, hydrogen molecules are separated into protons and electrons through an oxidation reaction (formula (2)). The protons are conducted in the electrolyte membrane 21 and moved to the cathode catalyst layer 23. The electrons are moved to the cathode catalyst layer 23 through the voltage application unit 102.

Then, in the cathode catalyst layer 23, hydrogen molecules are generated again through a reduction reaction (formula (3)). It is known that, when the protons are conducted in the electrolyte membrane 21, a predetermined amount of water is moved from the anode AN to the cathode CA together with the protons as electroosmotic water.

At this time, hydrogen ($H_2$) generated at the cathode CA can be compressed by increasing the pressure drop in a hydrogen outlet path using a flow rate adjuster (not illustrated). Examples of the flow rate adjuster include a back pressure valve and a regulation valve provided in the hydrogen outlet path, for example.

$$\text{Anode: } H_2 \text{ (low pressure)} \rightarrow 2H^+ + 2e^- \cdots (2)$$

$$\text{Cathode: } 2H^+ + 2e^- \rightarrow H_2 \text{ (high pressure)} \cdots (3)$$

In this manner, in the electrochemical hydrogen pump 100, hydrogen in the hydrogen-containing gas supplied to the anode AN is compressed at the cathode CA by applying a voltage using the voltage application unit 102. Consequently, the electrochemical hydrogen pump 100 performs the hydrogen compression operation, and hydrogen compressed at the cathode CA is supplied to a hydrogen consumer at appropriate times. Examples of the hydrogen consumer include fuel cells, hydrogen reservoirs, and pipes for hydrogen infrastructures. For example, hydrogen compressed at the cathode CA may be temporarily stored in a hydrogen reservoir, which is an example of the hydrogen consumer. In addition, hydrogen stored in a hydrogen reservoir may be supplied to a fuel cell, which is an example of the hydrogen consumer, at appropriate times.

With the electrochemical hydrogen pump 100 according to the present embodiment, as described above, it is possible to suppress a reduction in the efficiency of hydrogen compression operation compared to the related art.

Specifically, in the electrochemical hydrogen pump 100 according to the present embodiment, a material with high hydrogen embrittlement resistance may be selected as the material of the power feed plate 11 which is exposed to compressed hydrogen, and a material with lower resistivity than the power feed plate 11 (first terminal 11A) may be selected as the material of the second terminal 107. In addition, a material with high hydrogen embrittlement resistance may be selected as the material of the power feed plate 12 which is exposed to compressed hydrogen, and a material with lower resistivity than the power feed plate 12 (first terminal 12A) may be selected as the material of the second terminal 108.

From the above, in the electrochemical hydrogen pump 100 according to the present embodiment, the second terminal 107 is directly connected to the voltage application unit 102, and the first terminal 11A of the power feed plate 11 is connected to the voltage application unit 102 via the second terminal 107, and thus the terminal resistance can be reduced compared to the case where the first terminal 11A of the power feed plate 11 is directly connected to the voltage application unit 102. In the electrochemical hydrogen pump 100 according to the present embodiment, in addition, the second terminal 108 is directly connected to the voltage application unit 102, and the first terminal 12A of the power feed plate 12 is connected to the voltage application unit 102 via the second terminal 108, and thus the terminal resistance can be reduced compared to the case where the first terminal 12A of the power feed plate 12 is directly connected to the voltage application unit 102.

Hence, with the electrochemical hydrogen pump 100 according to the present embodiment, the voltage rise of the voltage application unit 102 due to the terminal resistance is appropriately suppressed.

(Example 1)

The electrochemical hydrogen pump 100 according to the present example is similar to the electrochemical hydrogen pump 100 according to the embodiment except for the configuration of the second terminal 107 and the second terminal 108 described below.

As described above, the second terminal 107 and the second terminal 108 are each composed of a material with lower resistivity than the conductive material that composes each of the power feed plate 11 and the power feed plate 12. The second terminal 107 and the second terminal 108 may each be composed of a material containing copper. For example, the second terminal 107 and the second terminal 108 may each be composed of pure copper with a copper purity of about 99.90% or more, or may be composed of an alloy containing copper. Examples of pure copper as the former include tough pitch copper and oxygen-free copper. Examples of the alloy as the latter include brass.

In addition, the surfaces of the second terminal 107 and the second terminal 108 are preferably plated with nickel, tin, gold, etc. for the purpose of improving corrosion resistance and surface hardness. A nickel-plated member composed of a material containing copper can be mentioned as a terminal that achieves both high conductivity and low cost.

As described above, a low-cost and low-resistivity copper-containing conductive material is selected as the material of the second terminal 107 and the second terminal 108 in the electrochemical hydrogen pump 100 according to the present example, which makes it possible to render the second terminal 107 and the second terminal 108 highly conductive and cost-effective compared to the case where such a conductive material is not selected.

The electrochemical hydrogen pump 100 according to the present example may be the same as the electrochemical hydrogen pump 100 according to the embodiment except for the above features.

(Example 2)

The electrochemical hydrogen pump 100 according to the present example is similar to the electrochemical hydrogen pump 100 according to the embodiment except for the configuration of the second terminal 107 and the second terminal 108 described below.

Figs. 3A and 3B each illustrate an example of a terminal connection portion of a power feed plate in an electrochemical hydrogen pump according to a second example of the embodiment. Fig. 3A illustrates a section of the terminal connection portion of the power feed plate 11, and Fig. 3B illustrates a section of the terminal connection portion of the power feed plate 12.

As illustrated in Fig. 3A, the second terminal 107 includes a first bus bar 107A that overlaps one of the main surfaces of the first terminal 11A so as to make surface contact therewith, and a second bus bar 107B (additional bus bar) that overlaps the other of the main surfaces of the first terminal 11A so as to make surface contact therewith. However, the configuration of the second terminal 107 in Fig. 3A is exemplary, and is not limiting. For example, the second terminal 107 may not include the second bus bar 107B.

Here, the first bus bar 107A, the first terminal 11A, and the second bus bar 107B are fixed by appropriate coupling members (e.g. a bolt and a nut) so as to compose a stacked portion 200. That is, the main surfaces of the first terminal 11A make surface contact with the respective main surfaces of the first bus bar 107A and the second bus bar 107B so that the first terminal 11A is sandwiched between the first bus bar 107A and the second bus bar 107B. When a desired fastening force is applied to the above members by a bolt and a nut, the contact resistance between the first bus bar 107A and the first terminal 11A and the contact resistance between the first terminal 11A and the second bus bar 107B can be reduced.

In addition, the first bus bar 107A extends outward from the stacked portion 200, and the main surface of an extending portion 300 of the first bus bar 107A is in surface contact with a terminal 105 of the wire 103. The first bus bar 107A and the terminal 105 of the wire 103 are fixed by appropriate coupling members (e.g. a bolt and a nut) so that such members are stacked. When a desired fastening force is applied to the above members by a bolt and a nut, the contact resistance between the first bus bar 107A and the terminal 105 of the wire 103 can be reduced.

In the electrochemical hydrogen pump 100 according to the present example, as described above, the volume of the stacked portion 200 at which the first bus bar 107A, the first terminal 11A, and the second bus bar 107B overlap each other is increased compared to the case where a bus bar is disposed on only one of the main surfaces of the first terminal 11A, which improves the volume resistance of the stacked portion 200 and as a result reduces the terminal resistance of the terminal connection portion of the power feed plate 11.

In particular, in the case where the power feed plate 11 is composed of a thin metal plate in order to reduce the material cost, the resistance of the belt-shaped first terminal 11A which projects outward from the side surface of the metal plate becomes greater as the thickness of the metal plate is thinner. In the electrochemical hydrogen pump 100 according to the present example, however, an increase in the resistance of the first terminal 11A is suppressed appropriately by increasing the volume of the stacked portion 200 as described above.

The configuration of the terminal connection portion of the power feed plate 12 can be easily understood from the above description, and thus is not described. However, the configuration of the second terminal 108 in Fig. 3B is exemplary, and is not limiting. For example, the second terminal 108 may not include the second bus bar 108B.

[Verification Experiment]

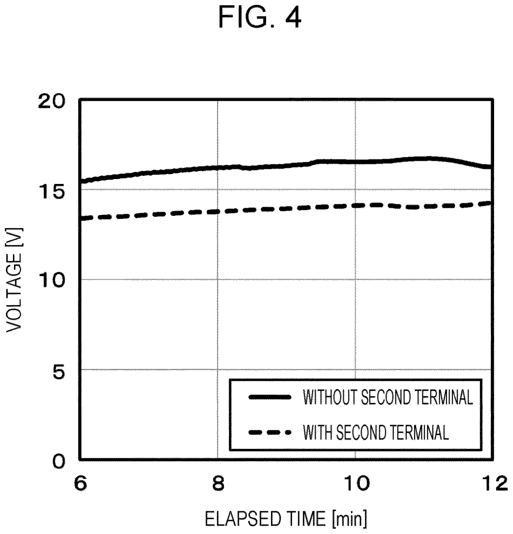

Fig. 4 illustrates an example of the results of verifying the effect of reducing the terminal resistance at the terminal connection portions in Figs. 3A and 3B. In Fig. 4, the horizontal axis represents the elapsed time from the start of the hydrogen compression operation of the electrochemical hydrogen pump 100, and the vertical axis represents the voltage of the voltage application unit 102.

<Experimental Conditions>

In the present verification experiment, the current density supplied to the electrochemical cells was set to about 2.5 A/cm$^2$, and the pressure of compressed hydrogen at the cathode CA was set to about 1.0 MPa.

Gold-plated metal plates made of SUS316L were used for members that composed the power feed plate 11 and the first terminal 11A and members that composed the power feed plate 12 and the first terminal 12A.

Nickel-plated first bus bar 107A and second bus bar 107B made of pure copper and nickel-plated first bus bar 108A and second bus bar 108B made of pure copper were used for members that composed the second terminal 107 and the second terminal 108, respectively.

<Experimental Results>

In Fig. 4, the voltage of the voltage application unit 102 with the use of the second terminal 107 and the second terminal 108 is indicated by a dotted line, and the voltage of the voltage application unit 102 without the use of the second terminal 107 and the second terminal 108 is indicated by a solid line. That is, in the latter case, the second terminal 107 and the second terminal 108 were not provided in the terminal connection portion in Figs. 3A and 3B, but the terminal 105 of the wire 103 and the terminal 106 of the wire 104 were directly connected to the first terminal 11A and the first terminal 12A, respectively.

It was found that, as illustrated in Fig. 4, the use of the second terminal 107 and the second terminal 108 reduced the voltage of the voltage application unit 102, as indicated by the dotted line in Fig. 4, compared to the case without the use of the second terminal 107 and the second terminal 108 (the solid line in Fig. 4). The effect of reducing the terminal resistance at the terminal connection portion in Figs. 3A and 3B by using the second terminal 107 and the second terminal 108 was verified in this manner.

The electrochemical hydrogen pump 100 according to the present example may be the same as the electrochemical hydrogen pump 100 according to the embodiment or the first example of the embodiment except for the above features.

(Modification)

The electrochemical hydrogen pump 100 according to the present modification is similar to the electrochemical hydrogen pump 100 according to the embodiment except for the configuration of the power supply plate 11 and the power supply plate 12 described below.

In the electrochemical hydrogen pump 100 according to the embodiment, the cathode separator 27 and the power feed plate 11 are configured separately, and the anode separator 26 and the power feed plate 12 are configured separately. However, such a configuration is exemplary, and is not limiting.

The electrochemical hydrogen pump 100 according to the present modification includes a metal member in which the cathode separator 27 and the power feed plate 11 are configured integrally. In addition, the electrochemical hydrogen pump 100 according to the present modification includes a metal member in which the anode separator 26 and the power feed plate 12 are configured integrally.

For example, the cathode separator 27 and the power feed plate 11 may be integrated through diffusion bonding etc. In addition, the anode separator 26 and the power feed plate 12 may be integrated through diffusion bonding etc.

In the above case, the metal member described above corresponds to an example of the "metal plate" according to the present disclosure. In addition, the through holes in the metal member which compose the cathode outlet manifold correspond to an example of the "flow path through which compressed hydrogen generated at the cathode flows" according to the present disclosure. Further, the communication path 80 and the communication path 81 in the metal member which functions as the cathode separator correspond to an example of the "flow path through which compressed hydrogen generated at the cathode flows" according to the present disclosure.

The function and effect of the electrochemical hydrogen pump 100 according to the present modification are the same as the function and effect of the electrochemical hydrogen pump 100 according to the embodiment, and thus are not described.

The electrochemical hydrogen pump 100 according to the present modification may be the same as the electrochemical hydrogen pump 100 according to any of the embodiment and the first and second examples of the embodiment except for the above features.

The embodiment, the first and second examples of the embodiment, and the modification of the embodiment may be combined with each other as long as they do not exclude each other.

Many improvements and other embodiments of the present disclosure would be obvious to a person skilled in the art from the above description. Thus, the above description should be interpreted as exemplary only, and is provided for the purpose of teaching a person skilled in the art the best mode for carrying out the present disclosure. The details of the structure and/or the function may be substantially changed without departing from the spirits of the present disclosure.

Industrial Applicability

One aspect of the present disclosure is applicable to a compression device that can suppress a reduction in the efficiency of hydrogen compression operation compared to the related art.

Reference Signs List

| | |
|---|---|
| 10 | hydrogen pump unit |
| 10A | hydrogen pump unit |
| 10B | hydrogen pump unit |
| 11 | power feed plate |
| 11A | first terminal |
| 11H | through hole |
| 12 | power supply plate |
| 12A | first terminal |
| 12H | through hole |
| 13 | insulating plate |
| 14 | insulating plate |
| 15 | end plate |
| 16 | end plate |
| 17 | fastener |
| 21 | electrolyte membrane |
| 22 | cathode power feeder |
| 23 | cathode catalyst layer |
| 24 | anode catalyst layer |
| 25 | anode power feeder |
| 26 | anode separator |
| 27 | cathode separator |
| 29 | bipolar plate |
| 40 | surface sealing material |
| 45 | O-ring |
| 80 | communication path |
| 81 | communication path |
| 100 | electrochemical hydrogen pump |
| 100A | stack |
| 102 | voltage application unit |
| 103 | wire |
| 104 | wire |
| 105 | terminal |
| 106 | terminal |
| 107 | second terminal |
| 107A | first bus bar |
| 107B | second bus bar |
| 108 | second terminal |
| 108A | first bus bar |
| 108B | second bus bar |
| 200 | stacked portion |
| 300 | extending portion |
| AN | anode |
| CA | cathode |
| CCM | catalyst coated membrane |

**Claims**

1.  A compression device comprising:

    an electrochemical cell that includes an anode and a cathode that sandwich an electrolyte membrane;
    a voltage application unit that applies a voltage between the anode and the cathode; and
    a metal plate that is exposed to compressed hydrogen generated at the cathode and that is resistant to hydrogen embrittlement,

wherein the metal plate includes a first terminal connected to the voltage application unit,
the first terminal is directly connected to a second terminal that has a lower resistance than the first terminal, and
the second terminal is directly connected to the voltage application unit, and the first terminal is connected to the voltage application unit via the second terminal.

2. The compression device according to claim 1, wherein the metal plate includes a flow path through which the compressed hydrogen flows.

3. The compression device according to claim 1 or 2, wherein the metal plate is composed of SUS316 or SUS316L.

4. The compression device according to any one of claims 1 to 3, wherein the second terminal is composed of a material containing copper.

# FIG. 1

COMPRESSED HYDROGEN
(HIGH PRESSURE)

100

17

15

HYDROGEN-
CONTAINING GAS
(LOW PRESSURE)

13

11(11A)

107

103

100A

102

104

14

HYDROGEN-
CONTAINING GAS
(LOW PRESSURE)

16

12(12A)

108

COMPRESSED HYDROGEN
(HIGH PRESSURE)

# FIG. 2

# FIG. 3A

15

107(107B)

11A    105

103

13

11

11H

COMPRESSED
HYDROGEN

107(107A)

200        300

# FIG. 3B

COMPRESSED
HYDROGEN

200

108(108B)

12A    106

104

12H

12

14

16

108(108A)

300

# FIG. 4

## INTERNATIONAL SEARCH REPORT

| International application No. |
|---|
| **PCT/JP2022/040945** |

**A. CLASSIFICATION OF SUBJECT MATTER**

***C25B 9/65***(2021.01)i; ***C01B 3/00***(2006.01)i; ***C25B 1/02***(2006.01)i; ***C25B 9/00***(2021.01)i; ***C25B 9/05***(2021.01)i; ***C25B 9/23***(2021.01)i

FI:   C25B9/65; C01B3/00 Z; C25B1/02; C25B9/00 Z; C25B9/05; C25B9/23

According to International Patent Classification (IPC) or to both national classification and IPC

**B. FIELDS SEARCHED**

Minimum documentation searched (classification system followed by classification symbols)

C25B1/00-C25B15/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-218668 A (PANASONIC IP MANAGEMENT CORP.) 14 December 2017 (2017-12-14)<br>paragraphs [0008]-[0012], [0029]-[0060], fig. 1, 5-10 | 1-4 |
| Y | JP 6928922 B1 (PANASONIC IP MANAGEMENT CORP.) 12 August 2021 (2021-08-12)<br>paragraphs [0041]-[0143], fig. 1-5 | 1-4 |
| Y | JP 52-142286 A (SANYO ELECTRIC CO., LTD.) 28 November 1977 (1977-11-28)<br>page 1, lower left column, line 12 to lower right column, line 18, fig. 1, 2 | 1-4 |
| Y | JP 2017-520899 A (SAINT-GOBAIN GLASS FRANCE) 27 July 2017 (2017-07-27)<br>paragraphs [0072]-[0079], fig. 1, 2 | 1-4 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/040945**

| Patent document cited in search report | | | Publication date (day/month/year) | Patent family member(s) | | | Publication date (day/month/year) |
|---|---|---|---|---|---|---|---|
| JP | 2017-218668 | A | 14 December 2017 | US 2017/0350021 A1 paragraphs [0008]-[0012], [0045]-[0080], fig. 1, 5-10 EP 3254747 A1 | | | |
| JP | 6928922 | B1 | 12 August 2021 | US 2021/0305607 A1 paragraphs [0051]-[0156], fig. 1-5 WO 2021/140779 A1 CN 113383113 A | | | |
| JP | 52-142286 | A | 28 November 1977 | (Family: none) | | | |
| JP | 2017-520899 | A | 27 July 2017 | US 2017/0033481 A1 paragraphs [0087]-[0094], fig. 1, 2 WO 2015/165632 A1 CA 2944365 A1 KR 10-2017-0017872 A CN 106507693 A | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6928922 B

- JP 6129809 B

**Non-patent literature cited in the description**

- **YUKITAKA MURAKAMI.** Mechanism of Hydrogen Embrittlement and Design of Strength of Hydrogen Devices. Yokendo Co., Ltd, 2012, 213, , 216